# EUROPÄISCHE PATENTSCHRIFT

(11) **EP 4 010 165 B1**
(45) Veröffentlichungstag und Bekanntmachung des Hinweises auf die Patenterteilung: **08.10.2025**
(21) Anmeldenummer: 19758633.2
(22) Anmeldetag: 08.08.2019
(51) Int. Cl.: B29C 48/02, B29C 48/05, B29C 48/25, B29C 48/285, B29C 48/395, B29C 48/625, B29C 48/68, B29C 48/80, B29C 64/106, B29C 64/209, B29C 64/393, B33Y 10/00, B33Y 30/00, B33Y 50/02

(54) **VERFAHREN UND EXTRUSIONSVORRICHTUNG ZUR EXTRUSION VON FASERVERSTÄRKTEM KUNSTSTOFFMATERIAL FÜR DIE ADDITIVE FERTIGUNG EINES BAUTEILS**
METHOD AND EXTRUSION APPARATUS FOR EXTRUSION OF FIBER-REINFORCED PLASTIC MATERIAL FOR THE ADDITIVE MANUFACTURE OF A COMPONENT
PROCÉDÉ ET APPAREIL D'EXTRUSION DESTINÉS À L'EXTRUSION DE MATIÈRE PLASTIQUE RENFORCÉE PAR DES FIBRES POUR LA FABRICATION ADDITIVE D'UN ÉLÉMENT

(43) Veröffentlichungstag der Anmeldung: 15.06.2022
(73) Patentinhaber: New AIM3D GmbH, 18069 Rostock (DE)
(72) Erfinder: MORRISON, Vincent, 18292 Krakow am See (DE); LIEBERWIRTH, Clemens, 18059 Rostock (DE); ZIELKE, René, 18069 Rostock (DE); RADON, Robert, 18055 Rostock (DE); WEIDNER, Tim, 18057 Rostock (DE)
(74) Vertreter: Maikowski & Ninnemann Patentanwälte Partnerschaft mbB
(86) Internationale Anmeldenummer: PCT/EP2019/071342
(87) Internationale Veröffentlichungsnummer: WO 2021/023389

(56) Entgegenhaltungen:
- WO-A1-2017/202398
- DE-A1- 102013 002 559
- DE-A1- 102017 114 841
- US-A1- 2015 321 419
- US-A1- 2017 291 364

## Beschreibung

Die vorgeschlagene Lösung betrifft ein Extrusionsverfahren und eine Extrusionsvorrichtung zur Extrusion von faserverstärktem Kunststoffmaterial für die additive Fertigung eines Bauteils.

Extrusionsvorrichtungen, z.B. in Form von Schneckenextrudern, finden vor allem im Bereich der Serienfertigung von Bauteilen mittels Spritzguss und Druckguss Anwendung. Dabei befinden sich eine Förderschnecke, eine Einspritzdüse und eine Matrize meist in einer waagerechten Linie zueinander. Die Befüllung mit Material, das hauptsächlich als Granulat oder Pulver vorliegt, erfolgt dabei in der Regel im hintersten Teil des Schneckenextruders, in der sogenannten Einzugszone. Das Material wird über einen Trichter, der auf einem Rohrschnitt des Extruders aufsitzt, direkt vertikal auf die Förderschnecke geführt. Durch einen ausreichend großen Querschnitt im Trichter, der eine Brückenbildung verhindert, fällt das Material schwerkraftgetrieben auf die Förderschnecke und wird von ihr eingezogen. Im Bereich der Serienfertigung werden in der Regel sogenannte Drei-Zonen-Schneckenextruder eingesetzt, welche das Material einziehen und zur Düse fördern. Das Material wird komprimiert, entlüftet und homogenisiert. Danach wird ein Druck zur Füllung der Matrize aufgebaut.

Die Einzugszone des Schneckenextruders ist häufig als Rohrschnitt in einem Gehäuse des Schneckenextruders ausgeführt. Auf diesem Rohrschnitt ist ein Trichter angeordnet über den das Material der Schnecke zugeführt werden kann. Rohrschnitt und Trichter sind von ihrem minimalen Querschnitt dabei so zu wählen, dass sich keine Brückenbildung des als Granulat vorliegenden Materials ergeben kann. Dies hängt dabei stark von Schüttwinkel und Reibungskoeffizient des verwendeten Schüttgutes ab.

In der DE 10 2014 018 081 A1 ist eine 3D-Druckervorrichtung zur additiven Fertigung metallischer Bauteile beschrieben. Hierbei kommt ebenfalls ein Schneckenextruder zum Einsatz, der als Granulat vorliegendes Verarbeitungsmaterial verarbeitet. In einem verfahrbaren Druckkopf der 3D-Druckvorrichtung wird mittels eines senkrecht angeordneten Schneckenextruders das thermoplastisch verformbare Verarbeitungsmaterial schichtweise extrudiert, um ein dreidimensionales Bauteil zu erzeugen. Nähere Angaben zur Förderung des Verarbeitungsmaterials an die Extruderschnecke enthält die DE 10 2014 018 081 A1 nicht.

Der Einsatz von Schneckenextrudern für die additive Fertigung ist vor allem durch ihr Gewicht und ihre Baugröße limitiert, die typischerweise stark von der Länge der Förderschnecke (Extruderschnecke) abhängen, da die Schneckenextruder entweder verfahrbar ausgeführt sein müssen oder das gesamte Baufeld bewegt wird. Letztere Variante macht es allerdings erforderlich, die gesamte 3D-Druckvorrichtung deutlich überzudimensionieren. Ferner ist bei bisher bekannten Extrusionsverfahren für die additive Fertigung typischerweise zu beobachten, dass hiermit bei der Verarbeitung von faserverstärktem Kunststoffmaterial eine gewünschte oder sogar erforderliche Materialfestigkeit an dem herzustellenden Bauteil nur schwer oder überhaupt nicht realisierbar ist.

Die DE 10 2017 114 841 A1 beschreibt ein Verfahren zur Extrusion von thermomechanisch verformbaren Materialien sowie einen Schneckenextruder kompakter Bauform mit einem Längen-Durchmesserverhältnis von 3 - 10.

Der vorgeschlagenen Lösung liegt vor diesem Hintergrund die Aufgabe zugrunde, die Verarbeitung von faserverstärktem Kunststoffmaterial für die additive Fertigung weiter zu verbessern, um die bisher aus dem Stand der Technik bekannten Nachteile zu überwinden oder zumindest zu reduzieren.

Diese Aufgabe ist mit einem Verfahren des Anspruchs 1 sowie einer Extrusionsvorrichtung des Anspruchs 8 gelöst.

Bei einem vorgeschlagenen Verfahren zur Extrusion von faserverstärktem Kunststoffmaterial für die additive Fertigung eines Bauteils ist hierbei vorgesehen, dass
- das faserverstärkte Kunststoffmaterial einer Extrusionsvorrichtung zugeführt und in einer Heizzone der Extrusionsvorrichtung erhitzt wird, um das faserverstärkte Kunststoffmaterial nachfolgend einer - gegebenenfalls auswechselbaren - Extrusionsdüse der Extrusionsvorrichtung zuzuführen, an der ein Materialfaden mit (geschmolzenem) faserverstärktem Kunststoffmaterial für das herzustellende Bauteil extrudiert wird, und
- zur Förderung des faserverstärkten Kunststoffmaterials durch die Heizzone eine Förderschnecke der Extrusionsvorrichtung genutzt ist, die ein Längen-Durchmesserverhältnis kleiner 10 aufweist.

Ferner ist im Rahmen der vorgeschlagenen Lösung in der Heizzone weniger als 5,5 cm³ an Volumen für das faserverstärkte Kunststoffmaterial zur Verfügung gestellt und eine Drehzahl der Förderschnecke (um ihre Längsachse) wird auf maximal 30 Umdrehungen je Minute begrenzt.

Die vorgeschlagene Lösung geht somit - auf Basis experimentell gewonnener Erkenntnisse - von dem Grundgedanken aus, dass für die Extrusion von faserverstärktem Kunststoffmaterial zur additiven Fertigung eines Bauteils einerseits eine Förderschnecke (Extruderschnecke) mit einem Längen-Durchmesserverhältnis kleiner 10 kombiniert mit einem auf 5,5 cm³ oder weniger begrenzten Volumen in der Heizzone und einer definiert begrenzten Maximaldrehzahl der Förderschnecke von 30 Umdrehrungen je Minute oder weniger besonders vorteilhaft ist, um additiv ein Bauteil mit faserverstärktem Kunststoffmaterial extrusionsbasiert herzustellen. So hat sich gezeigt, dass auf Basis der vorgeschlagenen Lösung effektiv eine Degradierung des Kunststoffmaterials bei der Extrusion vermieden werden kann und gleichzeitig eine besonders vorteilhafte Faserorientierung im fertigen Bauteil erreicht wird, die sich positiv auf eine Erhöhung der Materialfestigkeit an dem gefertigten Bauteil auswirken. Die limitierte Drehzahl der Förderschnecke - insbesondere in Kombination mit einen Längen-Durchmesserverhältnis kleiner 10 für die Förderschnecke und einem auf 5,5 cm³ oder weniger begrenztes Volumen für das faserverstärkte Kunststoffmaterial in der Heizzone - kann sich hierbei z.B. auch positiv die auf das Kunststoffmaterial bei der Extrusion über die Förderschnecke aufgebrachten Scherkräfte auswirken, sodass vergleichsweise lange und nicht abgescherte Fasern in dem fertigen Bauteil erhalten werden. So führt die begrenzte Drehzahl der Förderschnecke zu (für die Scherrate mit maßgeblichen) Umfangsgeschwindigkeiten, die um einen Faktor im Bereich von 50 bis 80 mal kleiner sind als in konventionellen Spritzgießmaschinen.

In diesem Zusammenhang kann es in einer Ausführungsvariante von Vorteil sein, in der Heizzone ein Volumen im Bereich von 2,5 cm³ bis 5,5 cm³, insbesondere 2,5 cm³ bis 4,5 cm³ für das faserverstärkte Kunststoffmaterial zur Verfügung zu stellen. Insbesondere ist in einer Ausführungsvariante ein Volumen im Bereich von 3,0 cm³ bis 3,5 cm³, zum Beispiel bei ca. 3,30 cm³, vorgesehen. Das Volumen, das für das faserverstärkte Kunststoffmaterial in der Heizzone der Extrusionsvorrichtung zur Verfügung gestellt wird, errechnet sich hierbei aus dem Volumen eines Hohlraums, der in einem die Heizzone definierenden Gehäuseabschnitt ausgebildet ist und in dem sich die Förderschnecke erstreckt, minus dem durch die Förderschnecke selbst eingenommenen Volumen in der Heizzone.

In einer Ausführungsvariante ist eine Förderrate der Förderschnecke für das faserverstärkte Kunststoffmaterial derart eingestellt, dass das in Richtung der Extrusionsdüse zu fördernde faserverstärkte Kunststoffmaterial maximal 20 Minuten in der Heizzone verbleibt. Die Förderrate und/oder die Verweilzeit können hierbei unmittelbar an der Extrusionsvorrichtung einstellbar sein - unter Berücksichtigung der auf maximal 30 Umdrehungen je Minute begrenzten Drehzahl der Förderschnecke. Alternativ können die Förderrate und/oder die Verweilzeit über eine Veränderung der Drehzahl der Förderschnecke einstellbar sein.

Insbesondere in Abhängigkeit von dem verwendeten Kunststoffmaterial, und der Form des zugeführten Rohmaterials an faserverstärktem Kunststoffmaterial kann die Förderrate der Förderschnecke für eine Verweilzeit von wenigstens 1,5 Sekunden, insbesondere wenigstens 4.75 Sekunden oder 50 Sekunden, und maximal 20 Minuten des zu fördernden faserverstärktem Kunststoffmaterials in der Heizzone eingestellt sein. Beispielsweise hat sich bei bestimmten faserverstärkten Kunststoffmaterialien eine Verweilzeit im Bereich von 1,5 bis ca. 60 Sekunde oder mehreren Minuten als vorteilhaft erwiesen, wenn das faserverstärkte Kunststoffmaterial in Pulver- oder Granulatform der Extrusionsvorrichtung zugeführt wird.

Eine Förderrate des Kunststoffmaterials kann beispielsweise auf einen Wert von wenigstens 5 cm³ je Stunde eingestellt sein und/oder auf einen Wert von maximal 7500 cm³ je Stunde eingestellt sein. Die Förderschnecke kann somit einen vergleichsweise hohen Austrag aufweisen. Beispielsweise kann die Förderrate im Bereich von 10 cm³ je Stunde bis 5500 cm³ je Stunde eingestellt sein, insbesondere z.B. im Bereich von 10 cm³ je Stunde bis 2500 cm³ je Stunde, von 10 cm³ je Stunde bis 250 cm³ je Stunde.

In einer Ausführungsvariante ist die Förderrate der Förderschnecke für das faserverstärkte Kunststoffmaterial beispielsweise auf einen Wert im Bereich von 150 cm³ je Stunde bis 220 cm³ je Stunde, insbesondere im Bereich von 150 cm³ Stunde bis 200 cm³ je Stunde eingestellt. Beispielsweise kann für eine Förderrate von 10 cm³ je Stunde und einem für das faserverstärkten Kunststoffmaterial in der Heizzone zur Verfügung gestelltes Volumen von 3.3 cm³ eine maximale Verweilzeit des faserverstärkten Kunststoffmaterials in der Heizzone von unter 20 min eingestellt sein.

Das faserverstärkte Kunststoffmaterial kann beispielsweise ein thermoplastisches Matrixmaterial und Carbonfasern und/oder Glasfasern, und/oder anderer Aramidfasern und/oder synthetische Fasern und/oder kunststoffbasierte Fasern und/oder Naturfasern und/oder Keramikfasern aufweisen. Alternativ oder ergänzend kann das Matrixmaterial wenigstens eines der folgenden Materialien aufweisen, insbesondere aus einem der folgenden Materialien bestehen: Polycarbonat, Polylactat, Polyethylen, Polyethylenterephthalat, Polymethylmethacrylat, Polybutylenterephthalat, Acrylnitril-Butadien-Styrol-Copolymer, Polyoxymethylen, Polypropylen, Polystyrol, Polyvinylchlorid, Polyamid.

In einer Ausführungsvariante enthält das faserverstärkte Kunststoffmaterial mindestens ein zusätzliches Verstärkungsmaterial, zum Beispiel aus Mehl und/oder Bruchstücken. Insbesondere können Bruchstücke aus Glas als zusätzliches Verstärkungsmaterial enthalten sein

In einer Ausführungsvariante wird das Kunststoffmaterial über eine Materialzufuhr an einer Einzugszone der Extrusionsvorrichtung zugeführt. Beispielsweise ist hierfür ein trichterförmiger Einlass für die Definition der Einzugszone vorgesehen. An der Einzugszone kann ein Einzugsbereich der Förderschnecke vorgesehen sein, von dem aus durch Drehung der Förderschnecke um ihre (Schnecken-) Längsachse das an der Einzugszone zugeführte, zum Beispiel pulverförmige oder granulatförmige, faserverstärkte Kunststoffmaterial in Richtung der Extrusionsdüse gefördert wird. Über Schneckengänge der Förderschnecke wird hierbei das faserverstärkte Kunststoffmaterial mitgenommen. Hierbei sind die Schneckengänge der Förderschnecke derart ausgebildet, dass das Kunststoffmaterial bis zum Erreichen der Heizzone keine Kompression erfährt. Eine Kompression über die Förderschnecke ist dann beispielsweise erst in einer Schmelz- und Kompressionszone der Förderschnecke vorgesehen, die im Bereich der Heizzone liegt und eine Kompression und - in Kombination mit der an der Heizzone zugeführten Wärme - ein Aufschmelzen des Kunststoffmaterials bewirkt. Grundsätzlich kann hierfür auch eine Steigungsänderung der Schneckengänge oder eine Änderung eines Durchmessers einer die Schneckengänge ausbildenden Welle der Förderschnecke vorgesehen sein.

Grundsätzlich kann das faserverstärkte Kunststoffmaterial, als Kompositwerkstoff, einen Volumen- oder Massenanteil an Verstärkungsmaterial, insbesondere der Fasern, von mindestens 10 % aufweisen.

Grundsätzlich kann ferner im Rahmen des Extrusionsverfahrens eine Orientierung der Fasern durch eine Variation von Prozessparametern, insbesondere der Extrusionstemperatur, gesteuert werden und/oder eine Ablage der Fasern des aufgebrachten faserverstärktem Kunststoffmaterials derart erfolgen, dass zwei oder mehr über einen Materialfaden aufgebrachte Schichten des zu fertigenden Bauteils miteinander verbunden werden.

Ein weiterer Aspekt der vorgeschlagenen Lösung betrifft eine Extrusionsvorrichtung zur Extrusion von faserverstärktem Kunststoffmaterial für die additive Fertigung eines Bauteils.

Hierbei weist die Extrusionsvorrichtung eine Heizzone auf, in der das zu extrudierende faserverstärkte Kunststoffmaterial erhitzt wird, um das faserverstärkte Kunststoffmaterial nachfolgend einer (gegebenenfalls auswechselbaren) Extrusionsdüse der Extrusionsvorrichtung zuzuführen, an der ein Materialfaden mit (geschmolzenem) faserverstärktem Kunststoffmaterial für das herzustellende Bauteil extrudierbar ist. Ferner weist die Extrusionsvorrichtung zur Förderung des faserverstärkten Kunststoffmaterials durch die Heizzone und in Richtung der Extrusionsdüse eine Förderschnecke auf, die ein Längen-Durchmesserverhältnis kleiner 10 aufweist. In der Heizzone sind gemäß der vorgeschlagenen Lösung weniger als 5,5 cm³ an Volumen für das faserverstärkte Kunststoffmaterial zur Verfügung gestellt. Über eine elektronische Steuereinrichtung der Extrusionsvorrichtung ist darüber hinaus eine Drehzahl der Förderschnecke auf maximal 30 Umdrehungen je Minute begrenzt.

Grundsätzlich kann über die vorgeschlagene Extrusionsvorrichtung eine rasche Komprimierung plastifizierten, faserverstärkten Kunststoffmaterials erreicht werden, die wiederum eine Entmischung und damit Zersetzung des faserverstärkten Kunststoffmaterials verhindert. Ferner sind während der Extrusion vorteilhafte, mithin vergleichsweise geringe Scherkräfte auf das zu extrudierende Kunststoffmaterial erreichbar. Hierüber ist in Summe eine deutliche Verbesserung bei der additiven Fertigung eines Bauteils mithilfe eines an der Extrusionsdüse extrudierten Materialfadens aus faserverstärktem Kunststoffmaterial erreichbar.

Mit einer Ausführungsvariante einer vorgeschlagenen Extrusionsvorrichtung ist eine Ausführungsvariante eines vorgeschlagenen Extrusionsverfahrens ausführbar. Im Zusammenhang mit Ausführungsvarianten eines vorgeschlagenen Extrusionsverfahrens beschriebene Vorteile und Merkmale gelten somit auch für Ausführungsvarianten einer vorgeschlagenen Extrusionsvorrichtung und umgekehrt.

Über die elektronische Steuereinrichtung der Extrusionsvorrichtung kann auch eine Förderrate der Förderschnecke für das faserverstärkte Kunststoffmaterial derart vorgegeben, dass das in Richtung der Extrusionsdüse zu fördernde faserverstärkte Kunststoffmaterial maximal 30 Minuten, insbesondere wenigstens 1,5 Sekunden und maximal 20 Minuten, in der Heizzone verbleibt.

Beispielsweise ist über die Steuereinrichtung alternativ oder ergänzend eine (Volumen-) Förderrate der Förderschnecke vorgebbar und mit wenigstens 5 cm³ je Stunde vorgegeben und/oder auf maximal 7500 cm³ je Stunde begrenzt. Dies schließt insbesondere eine Ausführungsvariante ein, bei der über die elektronische Steuereinrichtung die Förderrate nicht unter 10 cm³ je Stunde, aber maximal auf 7500 cm³, einstellbar ist, z.B. auf maximal 5500 cm³ je Stunde, 2500 cm³ je Stunde, 1000 cm³ je Stunde oder 250 cm³ je Stunde begrenzt ist.

Über die elektronische Steuereinrichtung der Extrusionsvorrichtung kann beispielsweise eine bestimmte (Volumen-) Förderrate der Förderschnecke, gegebenenfalls in Abhängigkeit von dem zugeführten Kunststoffmaterial und/oder in Abhängigkeit von dem zur Verfügung gestellten Volumen innerhalb der Heizzone für das faserverstärkte Kunststoffmaterial (insbesondere bei auswechselbaren Gehäuseabschnitten für die Bildung der Heizzonen) voreingestellt sein. Derart muss ein Nutzer der Extrusionsvorrichtung beispielsweise lediglich die Art und Form des zugeführten faserverstärkten Kunststoffmaterials an einer mit der Steuereinrichtung gekoppelten Bedieneinheit eingeben, woraus dann die elektronische Steuereinrichtung auf Basis hinterlegter Referenzwerte (unter der nicht überschreitbaren Maximaldrehzahl von 30 Umdrehungen je Minute für die Förderschnecke) eine bestimmte Förderrate derart einstellt, dass die Verweildauer des zu extrudierenden faserverstärkten Kunststoffmaterials in der Heizzone unter 20 Minuten bleibt. So kann dann beispielsweise die vorgegebene Förderrate in Abhängigkeit davon variieren, welches thermoplastische Matrixmaterial mit welcher Art Fasern und/oder ob das faserverstärkte Kunststoffmaterial als Pulver oder als Granulat der Extrusionsvorrichtung zugeführt wird.

In einer Ausführungsvariante ist die Heizzone auf eine maximale Länge von 40 mm und einen maximalen Durchmesser von 25 mm begrenzt. Das hierüber zur Fügung gestellte Volumen für das faserverstärkte Kunststoffmaterial liegt somit in dieser Ausführungsvariante problemlos bei weniger als 5,5 cm³, insbesondere auch je nachdem, welches Volumen die Förderschnecke innerhalb der Heizzone einnimmt.

In einer Ausführungsvariante weist die Förderschnecke ein in Förderrichtung des Kunststoffmaterials ansteigendes Schneckenblatt auf. Das Schneckenblatt kann hierbei beispielsweise einen Anstieg von 7 mm bis 17 mm aufweisen, insbesondere von 8 mm bis 15 mm. Insbesondere mit einer derartigen Konfiguration der Förderschnecke hat sich in Kombination mit den auf Basis der vorgeschlagenen Lösung vorgegebenen Parametern gezeigt, dass jedenfalls bei granulatförmig zugeführtem faserverstärktem Kunststoffmaterial mit einer thermoplastischen Matrix vorteilhafte Orientierungen der Fasern in dem fertigen Bauteil und auch vergleichsweise lange und nicht abgescherte Fasern in dem fertigen Bauteil erreichbar sind.

In einer Ausführungsvariante weist die Heizzone an einem in Förderrichtung des Kunststoffmaterials liegenden Ende eine konische Verjüngung auf, über die faserverstärktes Kunststoffmaterial der Extrusionsdüse zuführbar ist. Beispielsweise weist diese konische Verjüngung dann einen Öffnungswinkel im Bereich von 50° bis 65°, insbesondere im Bereich von 55° bis 60° zum Beispiel von 58° auf. Der Grad der Verjüngung kann hierbei ebenfalls ein Einflussfaktor für die Materialfestigkeit und Faserorientierung an dem zu fertigenden Bauteil sein.

Die Extrusionsvorrichtung weist, wie bereits erläutert, eine Einzugszone auf, an der der Förderschnecke das faserverstärkte Kunststoffmaterial zuführbar ist. In Förderrichtung des Kunststoffmaterials folgt dann in einer Ausführungsvariante die Heizzone auf eine Barrierezone, die die Heizzonen räumlich von der Einzugszone der Extrusionsvorrichtung trennt. Über die Barrierezone ist dann beispielsweise eine thermische Barriere zwischen der Einzugszone und der Heizzone ausgebildet. Vorteilhaft kann hierbei sein, dass
- die Barrierezone durch einen Gehäuseabschnitt aus einem Material gebildet ist, das geringere thermische Leitfähigkeit aufweist als das Material, aus dem ein an die Barrierezone angrenzender Gehäuseabschnitt gebildet ist, durch den die Heizzone zumindest teilweise gebildet ist, und
- der die Heizzone zumindest teilweise bildende Gehäuseabschnitt eine größere thermische Masse aufweist als der die Barrierezone bildende Gehäuseabschnitt.

Beispielsweise besteht der Gehäuseabschnitt der Barrierezone aus einem hochfesten oder harten, aber thermisch schlecht leitfähigen, beispielsweise keramischen Material. Gegebenenfalls kann an der Barrierezone auch eine Kühlung vorgesehen sein, um eine Erwärmung der Einzugszone über die Heizzone der Extrusionsvorrichtung auf ein Mindestmaß zu begrenzen. In einer Ausführungsvariante ist die Barrierezone aus Zirkonoxid oder Aluminiumoxid hergestellt.

In einer Ausführungsvariante vergrößert sich ein Durchmesser einer Welle der Förderschnecke innerhalb der Heizzone wenigstens einmal in Förderrichtung des Kunststoffmaterials. Beispielsweise ist eine konische Vergrößerung des Durchmessers innerhalb der Heizzone vorgesehen, um die Kompression des faserverstärkten Kunststoffmaterials zu unterstützen. Die genannte Ausführungsvariante schließt hierbei folglich ein, dass ein Durchmesser der Welle an einem ersten Schneckenabschnitt der Förderschnecke einen ersten (kleineren) Durchmesser aufweist, während die Welle an einem sich hieran in Förderrichtung anschließender zweiten Schneckenabschnitt einen zweiten (größeren) Durchmesser aufweist. Die Förderschnecke kann folglich insbesondere nach Art einer Stopfschnecke ausgebildet sein. Für die Durchmesservergrößerung zwischen den ersten und zweiten Schneckenabschnitten kann beispielsweise ein konischer Übergangsbereich vorgesehen sein, an dem sich der Durchmesser der Welle der Förderschnecke in Förderrichtung von dem ersten Durchmesser auf den zweiten Durchmesser erhöht.

Dies schließt insbesondere eine Ausführungsvariante ein, bei der der Durchmesser einer Welle der Förderschnecke innerhalb der Heizzone, und insbesondere zum Beispiel in einer Schmelz- und Kompressionszone der Förderschnecke, konisch mit einem Winkel im Bereich von 7° bis 10° und bis zu einem 1,5- bis 2-fachen eines kleinsten (ersten) Durchmessers der Welle der Förderschnecke vergrößert ist. In einer hierauf basierenden Weiterbildung ist dann der Durchmesser bis zu einem in Förderrichtung liegenden Ende der Förderschnecke, im Bereich einer Ausstoßzone der Förderschnecke, konstant.

Beispielsweise ist in einer Ausführungsvariante vorgesehen, dass sich die Heizzone entlang einer (durch die Förderschnecke vorgegebenen) Förderrichtung des Kunststoffmaterials und parallel zu einer Längsachse der Förderschnecke mit einer Länge erstreckt, die maximal der Hälfte einer entlang der Längsachse gemessenen (Gesamt-) Länge der Förderschnecke entspricht. Eine Heizzonenlänge ist somit maximal halb so groß wie eine Länge der Förderschnecke. Eine derartige geometrische Begrenzung der Heizzonenlänge in Bezug auf die Gesamtlänge der Förderschnecke hat sich, insbesondere mit Blick auf das vorgesehene Längen-Durchmesserverhältnis der Förderschnecke kleiner 10, in bestimmten Konfigurationen als vorteilhaft erwiesen.

Alternativ oder ergänzend kann sich die Förderschnecke mit einer Schmelz- und Kompressionszone sowie einer in Förderrichtung des Kunststoffmaterials hierauf folgenden und ein axiales Ende der Förderschnecken aufweisenden Ausstoßzone innerhalb der Heizzone erstrecken, wobei die Schmelz- und Kompressionszone und die Ausstoßzone gemeinsam ein Drittel einer entlang der Längsachse gemessenen Länge der Förderschnecke nicht übersteigen. Der Teil der Förderschnecke, der die Schmelz- und Kompressionszone sowie die Ausstoßzone innerhalb der Heizzone der Extrusionsvorrichtung bildet, übersteigt somit mit seiner Länge 1/3 der Gesamtlänge der Förderschnecke nicht.

Insbesondere in dieser Ausführungsvariante kann vorgesehen sein, dass eine Gangsteigung der Förderschnecke in der Schmelz- und Kompressionszone gegenüber einem Einzugsbereich der Förderschnecke verringert ist, auf die die Schmelz- und Kompressionszone in Förderrichtung folgt und an der der Förderschnecke des Rohmaterial an faserverstärktem Kunststoffmaterial zugeführt wird. Bezogen auf die Förderrichtung des Kunststoffmaterials innerhalb der Extrusionsvorrichtung folgt somit entlang der Schneckenlängsachse und in Richtung der Extrusionsdüse die Schmelz- und Kompressionszone auf die Einzugszone, während auf die Schmelz- und Kompressionszone die Ausstoßzone folgt.

In einer Ausführungsvariante ist in einem Bereich zwischen einem in Förderrichtung des Kunststoffmaterials liegenden axialen Ende der Förderschnecke und der Extrusionsdüse ein Reservoir vorgesehen, in dem geschmolzenes faserverstärktes Kunststoffmaterial in einen Zustand des Überdrucks haltbar ist. Die Extrusionsvorrichtung weist somit in dem genannten Bereich ein Reservoir auf, das eingerichtet und vorgesehen ist, im Betrieb der Extrusionsvorrichtung geschmolzenes, faserverstärktes Kunststoffmaterial in einem Zustand des Überdrucks zu halten, um das Kunststoffmaterial an der Extrusionsdüse als Materialfaden auszutreten zu lassen.

Beispielsweise erstreckt sich hierbei das Reservoir mit einer Länge parallel zur Förderrichtung und parallel zur Längsachse der Förderschnecke, die maximal einem Drittel der entlang der Längsachse gemessenen Länge der Förderschnecke entspricht. Die Reservoirlänge übersteigt folglich 1/3 der Gesamtlänge der Förderschnecke nicht. Beispielsweise hat das Reservoir eine maximale Länge von 1/15 der Länge der Förderschnecke.

In einer Ausführungsvariante weist die Extrusionsdüse einen Düsendurchmesser im Bereich von 0,25 mm bis 2 mm auf. Insbesondere kann die Extrusionsdüse auswechselbar sein, sodass Extrusionsdüsen mit unterschiedlichen Düsendurchmessern, die z.B. jeweils im Bereich von 0,25 mm bis 2 mm liegen, an der Extrusionsvorrichtung nutzbar sind.

Ein weiterer Aspekt der vorgeschlagenen Lösung betrifft ferner eine 3D-Druckvorrichtung mit mindestens einer Ausführungsvariante einer vorgeschlagenen Extrusionsvorrichtung und/oder eine 3D-Druckvorrichtung mit einer Extrusionsvorrichtung zur Durchführung einer Ausführungsvariante des vorgeschlagenen Extrusionsverfahrens. Insbesondere kann eine solche 3D-Druckvorrichtung für ein mithilfe ihrer Extrusionsvorrichtung umgesetztes thermoplastisches Schmelzschichtungsverfahren eingerichtet und vorgesehen sein, wobei die Extrusionsvorrichtung zumindest als Teil eines Druckkopfs der 3D-Druckvorrichtung an einer dreiachsigen Kinematik verwendet ist.

Die beigefügten Figuren veranschaulichen exemplarisch mögliche Ausführungsvarianten der vorgeschlagenen Lösung

### Hierbei zeigen:

- Figur 1: eine schematische Darstellung einer 3D-Druckvorrichtung zur additiven Verarbeitung von faserverstärkten Kunststoffen mithilfe eines kompakten Schneckenextruders der 3D-Druckvorrichtung;
- Figur 2: eine Querschnittsansicht des Schneckenextruders;
- Figur 3: eine weitere Querschnittsansicht des Schneckenextruders;
- Figur 4: eine Draufsicht auf den Schneckenextruder; und
- Figur 5: eine schematische Darstellung einer mechanischen Verzahnung von mithilfe des Schneckenextruders abgelegten Materialfäden / -bahnen aus extrudiertem faserverstärktem Kunststoffmaterial.

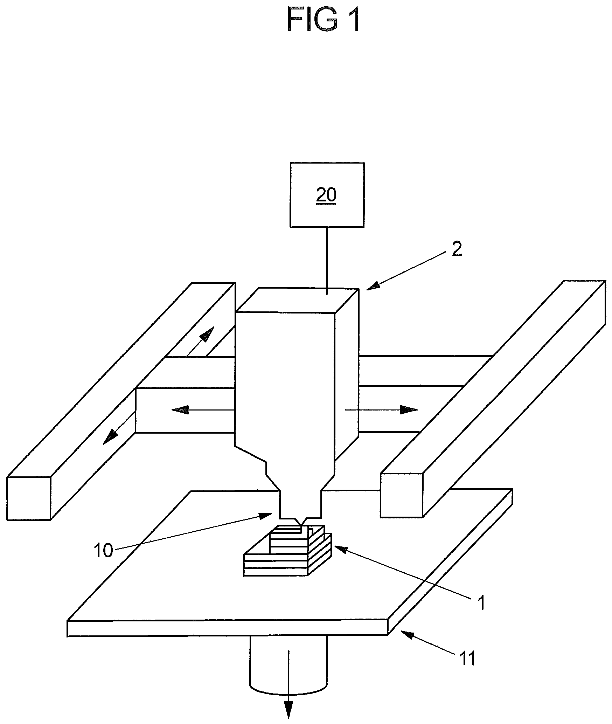

Die Figur 1 zeigt schematisch und in perspektivischer Ansicht eine 3D-Druckvorrichtung, bei der eine Ausführungsvariante einer vorgeschlagenen Extrusionsvorrichtung in Form eines Schneckenextruders 2 als Teil eines Druckkopfes der 3D-Druckvorrichtung vorgesehen ist. Mithilfe des Schneckenextruders 2 kann faserverstärktes Kunststoffmaterial zur additiven Fertigung eines Bauteils 1 im Wege thermoplastischer Schmelzschichtung genutzt werden. Der Schneckenextruder 2 ist dabei über eine dreiachsige Kinematik oberhalb einer Plattform oder Unterlage 11 verfahrbar, an der das herzustellende Bauteil 1 ausgebildet wird. Materialfäden aus geschmolzenem faserverstärktem Kunststoffmaterial werden hierbei über eine Extrusionsdüse 10 des Schneckenextruders 2 an der Unterlage 11 aufgebracht. Gesteuert wird der Extrusionsprozess über eine elektronische Steuereinrichtung 20 des Schneckenextruders 2.

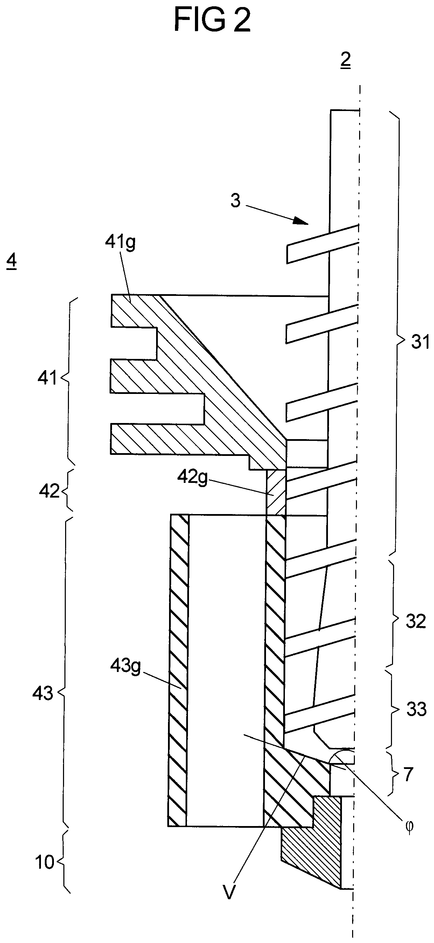

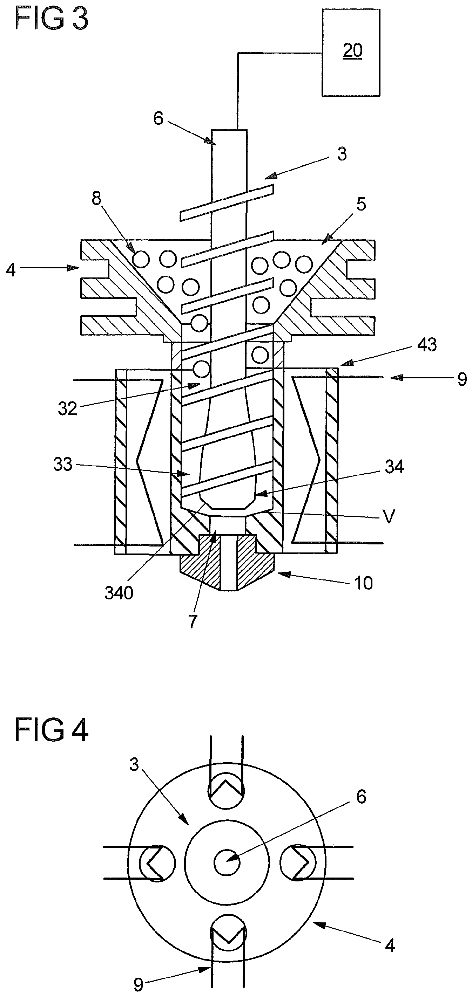

Wie anhand der vergrößerten Querschnittsansichten der Figuren 2 und 3 sowie anhand der Draufsicht der Figur 4 für den Schneckenextruder 2 veranschaulicht ist, weist der Schneckenextruder 2 zur Förderung in Pulver- oder Granulatform zugeführten faserverstärkten Kunststoffmaterials 8 in Richtung der Extrusionsdüse 10 eine Förderschnecke 3 auf. Diese Förderschnecke 3 erstreckt sich mit einer Gesamtlänge entlang einer (Schnecken-) Längsachse über einen Einzugsbereich 31, eine sich hieran anschließende Schmelz- und Kompressionszone 32 bis zu einer Ausstoßzone 33. Die Förderschnecke 3 ist dabei in einem Gehäuse 4 des Schneckenextruders 2 um ihre Längsachse drehbar aufgenommen und über einen hier nicht dargestellten motorischen Antrieb drehbar.

Das die Förderschnecke 3 zumindest teilweise aufnehmende Gehäuse 4 ist in der Querschnittsansicht der Figuren 2 und 3 mit unterschiedlichen Gehäuseabschnitten 41g, 42g und 43g dargestellt. Die einzelnen Gehäuseabschnitte 41g, 42g, 43g können hierbei auch eigenständige Gehäuseteile bilden, die untereinander verbunden sind und zusammen das Gehäuse 4 definieren. Ein erster Gehäuseabschnitt 41g definiert einen trichterförmigen Einlass 5 für die Zufuhr des pulverförmigen oder granulatförmigen faserverstärkten Kunststoffmaterials 8, das als Kompositwerkstoff beispielsweise ein thermoplastisches Matrixmaterial mit hierin eingebetteten Fasern aufweist. An den ersten Gehäuseabschnitt 41g mit dem Einlass 8, der eine Einzugszone 41 für die Zuführung des Kunststoffmaterials definiert, schließt sich in einer Förderrichtung zu der Extrusionsdüse 10 ein zweiter Gehäuseabschnitt 42g zur Bildung einer thermischen Barrierezone 42 an. Die Barrierezone 42 trennt die Einzugszone 41 von einer Heizzone 43, die durch einen nachfolgenden dritten Gehäuseabschnitt 43g des Gehäuses 4 gebildet ist. Für die thermische Trennung der Einzugszone 41 von der Heizzone 43 ist der zweiten Gehäuseabschnitt 42g beispielsweise durch einen hochfesten, aber thermisch sehr schlecht leitfähigen, zum Beispiel keramischen, Werkstoff hergestellt und weist gegebenenfalls eine zusätzliche Einzugskühlung auf. Beispielsweise besteht der Gehäuseabschnitt 42g der thermischen Barrierezone 42 aus Zirkonoxid oder Aluminiumoxid.

Für die Ausbildung der Heizzone 43 weist der dritte Gehäuseabschnitt 43g ein Heizelement 9 oder mehrere umfangsseitig verteilt angeordnete Heizelemente 9 auf. Über die Heizelemente 9 wird das in Richtung der Extrusionsdüse 10 geförderte faserverstärkte Kunststoffmaterial 8 aufgeschmolzen, sodass dieses in einem Materialfaden aus der Extrusionsdüse 10 extrudiert werden kann, dessen Dicke durch die Geometrie der hier auswechselbar an dem Gehäuse 4 festgelegten Extrusionsdüse 10 bestimmt ist.

Die im bestimmungsgemäß eingebauten Zustand vertikal angeordnete Förderschnecke 3 erstreckt sich innerhalb des Gehäuses 4 derart, dass der Einzugsbereich 31 der Förderschnecke 3 von dem ersten Gehäuseabschnitt 41g und der damit gebildeten Einzugszone 41 vollkommen umschlossen ist. Über die sich an die Einzugszone 31 anschließende Kompression- und Schmelzzone 32 der Förderschnecke 3 innerhalb des dritten Gehäuseabschnitts 43g und damit innerhalb der Heizzone 43 wird durch die Förderschnecke 3 das Kunststoffmaterial 8 komprimiert. Hierfür ist die Förderschnecke 3 als Stopfschnecke ausgebildet, bei der sich der Durchmesser einer Welle 6 der Förderschnecke 3 im Bereich der Schmelz- und Kompressionszone 32 konisch mit einem Winkel von 7° bis 10° und bis zu einem 1,5- bis 2-fachen eines kleinsten Durchmessers der Förderschnecke 3 vergrößert.

In einer sich an die Schmelz- und Kompressionszone 32 anschließenden Ausstoßzone 33 der Förderschnecke 3, die ebenfalls noch innerhalb der Heizzone 43 liegt, bleibt der (größere) Durchmesser der Welle 6 der Förderschnecke 3 konstant. An die Ausstoßzone 33 und damit an ein axiales Ende der Förderschnecke 3 schließt sich in Förderrichtung des faserverstärkten Kunststoffmaterials ein Reservoir 7 an. Dieses Reservoir 7 ist zwischen dem axialen Ende der Förderschnecke 3 und der Extrusionsdüse 10 ausgebildet und zumindest teilweise durch eine konische Verjüngung V innerer, der Förderschnecke 3 zugewandter Mantelflächen des dritten Gehäuseabschnitts 43g in der Heizzone 43 definiert ist. In diesem Reservoir 7 wird geschmolzenes faserverstärktes Kunststoffmaterial unter Überdruck gehalten, wobei das Reservoir 7 hier eine maximale Länge von 1/15 einer Gesamtlänge der Förderschnecke 3 aufweist. Die innenseitig vorgesehene konische Verjüngung V in dem dritten Gehäuseabschnitt 43g in Richtung der Extrusionsdüse 10 weist vorliegend einen Öffnungswinkel φ in der Größenordnung von 58° oder mehr auf.

Bei dem dargestellten Schneckenextruder 2 wird in dem Einzugsbereich 31 der Förderschnecke 3 das Kunststoffmaterial 8 zunächst in dem trichterförmigen Einlass 5 aufgenommen und durch die Förderschnecke 3 entlang der Förderrichtung nach unten transportiert. Durch die thermische Barrierezone 42 in dem Gehäuse 4 ist das Kunststoffmaterial 8 bis zu dem zweiten, die Barrierezone 42 ausbildenden Gehäuseabschnitt 42g rieselfähig. Ferner ist vorgesehen, dass bis zum Erreichen der Heizzone 43 innerhalb des Gehäuses 4 keine Kompression aufgrund einer Steigungsänderung der Schneckengänge oder des Durchmessers der Welle 6 der Förderschnecke 3 erfolgt.

Erst in der sich nach unten direkt an die Barrierezone 42 anschließenden Heizzone 43 wird das Kunststoffmaterial 8 aufgeschmolzen und komprimiert. Hierfür sind an der Heizzone 43 vorliegend gehäuseseitig die radial angeordneten Heizelementen 9 vorgesehen, die über die gesamte Länge der Heizzone 43 verlaufen und eine sehr lokale Einbringung von Wärmeenergie ermöglichen. Die Heizzone 43 hat hierbei gehäuseseitig maximal eine Länge, die der Hälfte der Länge der Förderschnecke 3 entspricht. Der die Heizzone 43 ausbildende dritte Gehäuseabschnitt 43g weist eine größere thermische Leitfähigkeit auf als der die Barrierezone 42 ausbildende zweite Gehäuseabschnitt 42g und weist auch gegenüber diesem zweiten Gehäuseaffen 42g eine größere thermische Masse auf.

Bei der dargestellten Extrusionsvorrichtung in Form des Schneckenextruders 2 ist das in der Heizzone 43 für faserverstärktes Kunststoffmaterial 8 zur Verfügung gestellte Volumen im Inneren des Gehäuses 4 auf weniger als 5,5 cm³, vorliegend auf etwa 3,30 cm³, begrenzt. Mit anderen Worten steht für das entlang der Längsachse der Förderschnecke 3 in Richtung der Extrusionsdüse 10 zu fördernde Kunststoffmaterial 8 in der Heizzone 43 ein maximales Volumen von 3,30 cm³ zur Verfügung. Hierbei berechnet sich dieses Volumen aus der Differenz des Hohlraums in dem dritten Gehäuseabschnitt 43g, in dem sich die Förderschnecke 3 mit ihrer Schmelz- und Kompressionszone 32 und ihrer Ausstoßzone 33 erstreckt, und dem von der Förderschnecke 3 selbst eingenommenen Volumen.

Darüber hinaus ist über die elektronische Steuereinrichtung 20 eine maximale Drehzahl der Förderschnecke 3 auf 30 Umdrehungen je Minute um die (Schnecken-) Längsachse begrenzt. Unter Berücksichtigung diese Drehzahlbegrenzung ist eine Volumenförderrate der Förderschnecke 3 vorliegend derart eingestellt, dass das in Richtung der Extrusionsdüse 10 zu fördernde faserverstärkte Kunststoffmaterial 8 maximal 20 Minuten, hier z.B. wenigstens 1,5 Sekunde, aber maximal 20 Minuten, in der Heizzone 43 verbleibt. Vorliegend ist hierbei ein gleichzeitig vergleichsweise hoher Austrag der Förderschnecke 3 im Bereich von bis zu 7500 cm³ je Stunde, insbesondere 5500 cm³ je Stunde, 2500 cm³ je Stunde, 1000 cm³ je Stunde oder 250 cm³ je Stunde erreicht. Kombiniert mit einem Längen-Durchmesserverhältnis der Förderschnecke 3 von unter 10 ist erreicht, dass das faserverstärkte Kunststoffmaterial 8 eine vergleichsweise kurze Zeit in der Heizzone 43 verbleibt, wodurch eine Degradierung des Kunststoffmaterials 8 vermieden wird. Dies wird auch durch die Ausbildung der Heizzone 43 mit einer maximalen Länge von 24 mm und einem Durchmesser von unter 18 mm gefördert. Darüber hinaus hat sich gezeigt, dass bei einem entsprechend den vorstehend genannten Prozessparametern mit dem Schneckenextruder 2 umgesetzten Extrusionsverfahren in dem pulverförmigen oder granulatförmigen Kunststoffmaterial 8 enthaltene Fasern nur zu einem vergleichsweise geringen Teil abgeschert werden und ca. 70% der Fasern in Verfahrrichtung der Extrusionsdüse 10 abgelegt werden. Hierüber eine Beeinflussung der Faserorientierung und damit der Festigkeit des herzustellenden Bauteils 1 unabhängig von der Bauteilgeometrie ermöglicht. Bei einem 3D-Druckvorgang muss lediglich der Verfahrweg der Extrusionsdüse 10 manipuliert werden.

Die Durchlaufzeit in der Heizzone 43 und entlang der Schmelz- und Kompressionszone 32 der Förderschnecke 3 ist grundsätzlich abhängig vom verwendeten faserverstärkten Kunststoffmaterial 8. Entsprechend der vorgeschlagenen Lösung wird Maximaldrehzahl der Förderschnecke 3 auf maximal 30 Umdrehungen je Minute begrenzt. Hierdurch ergeben sich - in Kombination mit dem Längen-Durchmesserverhältnis der Förderschnecke 3 von kleiner 10 - geringe Scherkräfte und die Durchlaufzeit ist so gewählt, dass die Verweilzeit des Kunststoffmaterials 8 in der Heizzone bei maximal 20 Minuten liegt. Durch die damit insbesondere auch aufgrund der Förderrate festgelegte kurze Verweilzeit der durch das vorgegebene Volumen von unter 5,5 cm³ definiert klein gehaltenen Menge an Kunststoffmaterial 8 in der auch geometrisch vergleichsweise kurz ausgestalteten Heizzone 43 (insbesondere bezogen auf die Länge der Förderschnecke 3) verbleibt das Kunststoffmaterial 8 nur kurze Zeit im heißen Zustand und die in der Schmelz-und Kompressionszone 32 vorgehaltener Schmelze hat eine hinreichend kurze Durchlaufzeit.

Der in den Figuren 1 bis 4 dargestellte kompakte Schneckenextruder 2 ist dabei in der Lage faserverstärktes Kunststoffmaterial 8 zu verarbeiten, dass beispielsweise wenigstens eines der nachfolgend genannten Matrixmaterialien enthält: Polycarbonat, Polylactat, Polyethylen, Polyethylenterephthalat, Polymethylmethacrylat, Polybutylenterephthalat, Acrylnitril-Butadien-Styrol-Copolymer, Polyoxymethylen, Polypropylen, Polystyrol, Polyvinylchlorid, Polyamid. Ferner können verschiedene Verstärkungsmaterialien in Form von Glasfasern, Aramidfasern, Stahlfasern, Carbonfasern, synthetische Fasern, kunststoffbasierte Fasern, Naturfasern und/oder Keramikfasern in dem Matrixmaterial eingebettet sein. Als zusätzliche Verstärkungen können auch Mehl oder Bruchstücke aus Glas oder anderen Werkstoffe genutzt werden. Ebenso kann der Kunststoff mineralverstärkt sein.

In einem Anwendungsszenario weist das faserverstärkte Kunststoffmaterial 8 einen Faseranteil von größer oder gleich 10 % auf, wobei keine Endlosfasern enthalten sind.

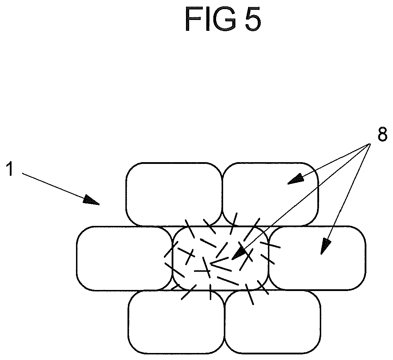

Mit dem Schneckenextruder 2 respektive mit der 3D-Druckvorrichtung, bei der der Schneckenextruder 2 ein Teil eines Druckkopfes bildet, lässt sich ein Bauteil 1 effektiv additiv fertigen. Für das Bauteil 1 lassen sich zum Beispiel über den mit dem Schneckenextruder 2 umgesetzten Extrusionsprozess entsprechend der schematischen Darstellung der Figur 5 mithilfe extrudierter Materialfäden aus faserverstärkten Kunststoffmaterial 8 Schichten (Materialbahnen) aufbringen, die 70% an Fasern enthalten, die in Verfahrrichtung der Extrusionsdüse 10 abgelegt sind. Die übrigen 30% der Fasern stehen in alle Raumrichtungen aus den aufgebrachten (gedruckten) Schichten heraus vor, wodurch sich eine mechanische Verzahnung der aufeinander abgelegten Schichten untereinander ergibt. Auf diese Weise kann eine vergleichsweise hohe Materialfestigkeit in dem fertigen Bauteil 1 erreicht und ein Verformung- und Versagensverhalten des fertigen Bauteils 1 gezielt vorgegeben werden.

### Bezugszeichenliste

- 1: Bauteil
- 10: Extrusionsdüse
- 11: Unterlage
- 2: Schneckenextruder (Extrusionsvorrichtung)
- 20: Steuereinrichtung
- 3: Förderschnecke / Extruderschnecke
- 31: Einzugsbereich
- 32: Schmelz- und Kompressionszone
- 33: Ausstoßzone
- 34: Endbereich
- 340: Fase
- 4: Gehäuse
- 41: Einzugszone
- 42: (thermische) Barrierezone
- 41g, 42g, 43g: Gehäuseabschnitt
- 43: Heizzone
- 5: Einlass
- 6: Welle
- 7: Reservoir
- 8: Faserverstärktes Kunststoffmaterial
- 9: Heizelement
- V: Verjüngung
- φ: Öffnungswinkel

## Patentansprüche

1. Verfahren zur Extrusion von faserverstärktem Kunststoffmaterial für die additive Fertigung eines Bauteils (1), wobei
- das faserverstärkte Kunststoffmaterial (8) einer Extrusionsvorrichtung (2) zugeführt und in einer Heizzone (43) der Extrusionsvorrichtung (2) erhitzt wird, um das faserverstärkte Kunststoffmaterial (8) nachfolgend einer Extrusionsdüse (10) der Extrusionsvorrichtung (2) zuzuführen, an der ein Materialfaden mit faserverstärktem Kunststoffmaterial (8) für das herzustellende Bauteil extrudiert wird, und
- zur Förderung des faserverstärkten Kunststoffmaterials (8) durch die Heizzone (43) eine Förderschnecke (3) der Extrusionsvorrichtung (2) genutzt ist, die ein Längen-Durchmesserverhältnis kleiner 10 aufweist,
**dadurch gekennzeichnet, dass**
in der Heizzone (43) maximal 5,5 cm³ an Volumen für das faserverstärkte Kunststoffmaterial (8) zur Verfügung gestellt sind und eine Drehzahl der Förderschnecke (3) auf maximal 30 Umdrehungen je Minute begrenzt wird.

2. Verfahren nach Anspruch 1, **dadurch gekennzeichnet, dass** in der Heizzone ein Volumen im Bereich von 2,5 cm³ bis 5,5 cm³ für das faserverstärkte Kunststoffmaterial zur Verfügung gestellt ist.

3. Verfahren nach Anspruch 2, **dadurch gekennzeichnet, dass** in der Heizzone ein Volumen im Bereich von 3,0 cm³ bis 3,5 cm³ für das faserverstärkte Kunststoffmaterial zur Verfügung gestellt ist.

4. Verfahren nach einem der Ansprüche 1 bis 3, **dadurch gekennzeichnet, dass** eine Förderrate der Förderschnecke (3) für das faserverstärkte Kunststoffmaterial (8) derart eingestellt ist, dass das in Richtung der Extrusionsdüse (10) zu fördernde faserverstärkte Kunststoffmaterial (8) maximal 30 Minuten, insbesondere wenigstens 1,5 Sekunden und maximal 20 Minuten, in der Heizzone (43) verbleibt.

5. Verfahren nach einem der vorhergehenden Ansprüche, **dadurch gekennzeichnet, dass** eine Förderrate der Förderschnecke (3) für das faserverstärkte Kunststoffmaterial (8) auf einen Wert von wenigstens 5 cm³/h eingestellt ist.

6. Verfahren nach Anspruch 5, **dadurch gekennzeichnet, dass** die Förderrate der Förderschnecke (3) für das faserverstärkte Kunststoffmaterial (8) auf einen Wert von maximal 7500 cm³/h eingestellt ist.

7. Verfahren nach Anspruch 6, **dadurch gekennzeichnet, dass** die Förderrate der Förderschnecke (3) für das faserverstärkte Kunststoffmaterial (8) auf einen Wert im Bereich kleiner 250 cm³/h, insbesondere im Bereich von 150 cm³/h bis 220 cm³/h eingestellt ist.

8. Extrusionsvorrichtung zur Extrusion von faserverstärktem Kunststoffmaterial für die additive Fertigung eines Bauteils (1), wobei
- die Extrusionsvorrichtung (2) eine Heizzone (43) aufweist, in der das zu extrudierende faserverstärkte Kunststoffmaterial erhitzt wird, um das faserverstärkte Kunststoffmaterial (8) nachfolgend einer Extrusionsdüse (10) der Extrusionsvorrichtung (2) zuzuführen, an der ein Materialfaden mit faserverstärktem Kunststoffmaterial (8) für das herzustellende Bauteil extrudierbar ist, und
- die Extrusionsvorrichtung (2) zur Förderung des faserverstärkten Kunststoffmaterials (8) durch die Heizzone (43) eine Förderschnecke (3) aufweist, die ein Längen-Durchmesserverhältnis kleiner 10 aufweist,
**dadurch gekennzeichnet, dass**
in der Heizzone (43) maximal 5,5 cm³ an Volumen für das faserverstärkte Kunststoffmaterial (8) zur Verfügung gestellt sind und über eine elektronische Steuereinrichtung (20) der Extrusionsvorrichtung (2) eine Drehzahl der Förderschnecke (3) auf maximal 30 Umdrehungen je Minute begrenzt ist.

9. Extrusionsvorrichtung nach Anspruch 8, **dadurch gekennzeichnet, dass** die Förderschnecke (3) ein in Förderrichtung des Kunststoffmaterials (8) ansteigendes Schneckenblatt mit einem Anstieg von 7 mm bis 17 mm aufweist.

10. Extrusionsvorrichtung nach Anspruch 8 oder 9, **dadurch gekennzeichnet, dass**
- die Heizzone (43) an einem in Förderrichtung des Kunststoffmaterials (8) liegenden Ende eine konische Verjüngung (V) aufweist, über die faserverstärktes Kunststoffmaterial (8) der Extrusionsdüse (10) zuführbar ist, und die konische Verjüngung (V) einen Öffnungswinkel (φ) im Bereich von 50° bis 65° aufweist, und/oder
- sich ein Durchmesser einer Welle (6) der Förderschnecke (3) innerhalb der Heizzone (43) wenigstens einmal in Förderrichtung des Kunststoffmaterials (8) vergrößert, und/oder
- sich die Heizzone (43) entlang einer Förderrichtung des Kunststoffmaterials (8) und parallel zu einer Längsachse der Förderschnecke (3) mit einer Länge erstreckt, die maximal der Hälfte einer entlang der Längsachse gemessenen Länge der Förderschnecke (3) entspricht, und/oder
- sich die Förderschnecke (3) mit einer Schmelz- und Kompressionszone (32) sowie einer in Förderrichtung des Kunststoffmaterials (8) hierauf folgenden und ein axiales Ende der Förderschnecke (3) aufweisenden Ausstoßzone (33) innerhalb der Heizzone (43) erstreckt und die Schmelz- und Kompressionszone (32) und die Ausstoßzone (33) gemeinsam ein Drittel einer entlang der Längsachse gemessenen Länge der Förderschnecke (3) nicht übersteigen.

11. Extrusionsvorrichtung nach Anspruch 10, **dadurch gekennzeichnet, dass** sich der Durchmesser der Welle (6) innerhalb der Heizzone (43) konisch mit einem Winkel im Bereich von 7° bis 10° und auf bis zu einem 1,5- bis 2-fachen eines kleinsten Durchmessers der Welle (6) der Förderschnecke (3) vergrößert.

12. Extrusionsvorrichtung nach einem der Ansprüche 8 bis 11, **dadurch gekennzeichnet, dass** die Extrusionsvorrichtung (2) eine Einzugszone (41) aufweist, an der der Förderschnecke (3) das faserverstärkte Kunststoffmaterial zuführbar ist, und in Förderrichtung des Kunststoffmaterials (8) die Heizzone (43) auf eine Barrierezone (42) folgt, die die Heizzone (43) räumlich von der Einzugszone (41) der Extrusionsvorrichtung (2) trennt, wobei
- die Barrierezone (42) durch einen Gehäuseabschnitt (42g) aus einem Material gebildet ist, das eine geringere thermische Leitfähigkeit aufweist als das Material, aus dem ein an die Barrierezone (42) angrenzender Gehäuseabschnitt (43g) besteht, mit dem die Heizzone (43) zumindest teilweise gebildet ist, und
- der die Heizzone (43) zumindest teilweise bildende Gehäuseabschnitt (43g) eine größere thermische Masse aufweist als der die Barrierezone (42) bildende Gehäuseabschnitt (42g).

13. Extrusionsvorrichtung nach einem der Ansprüche 8 bis 12, **dadurch gekennzeichnet, dass** in einem Bereich zwischen einem in Förderrichtung des Kunststoffmaterials (8) liegenden axialen Ende der Förderschnecke (3) und der Extrusionsdüse (10) ein Reservoir (7) vorgesehen ist, in dem geschmolzenes faserverstärktes Kunststoffmaterial (8) in einem Zustand des Überdrucks haltbar ist.

14. Extrusionsvorrichtung nach Anspruch 13, **dadurch gekennzeichnet, dass** sich das Reservoir mit einer Länge parallel zur Förderrichtung und zur Längsachse der Förderschnecke (3) erstreckt, die maximal einem Drittel der entlang der Längsachse gemessenen Länge der Förderschnecke (3) entspricht.

15. 3D-Druckvorrichtung mit mindestens einer Extrusionsvorrichtung (2) nach einem der Ansprüche 8 bis 14.

## Claims

1. A method for extrusion of fiber-reinforced plastic material for the additive manufacture of a component (1), wherein
- the fiber-reinforced plastic material (8) is supplied to an extrusion apparatus (2) and heated in a heating zone (43) of the extrusion apparatus (2) in order to then supply the fiber-reinforced plastic material (8) to an extrusion nozzle (10) of the extrusion apparatus (2), at which a material thread comprising fiber-reinforced plastic material (8) is extruded for the component to be manufactured, and
- in order to convey the fiber-reinforced plastic material (8) through the heating zone (43), a screw conveyor (3) of the extrusion apparatus (2) is utilized, which has a length-diameter ratio of less than 10,
**characterized in that**
in the heating zone (43) a maximum of 5.5. cm³ of volume is provided for the fiber-reinforced plastic material (8) and a rotational speed of the screw conveyor (3) is limited to a maximum of 30 revolutions per minute.

2. The method according to claim 1, **characterized in that** in the heating zone a volume in the range of 2.5 cm³ to 5.5 cm³ is provided for the fiber-reinforced plastic material.

3. The method according to claim 2, **characterized in that** in the heating zone a volume in the range of 3.0 cm³ to 3.5 cm³ is provided for the fiber-reinforced plastic material.

4. The method according to any of claims 1 to 3, **characterized in that** a feed rate of the screw conveyor (3) is set for the fiber-reinforced plastic material (8) in such a way that the fiber-reinforced plastic material (8) to be fed in the direction of the extrusion nozzle (10) remains in the heating zone (43) for a maximum of 30 minutes, in particular for at least 0.5 seconds and a maximum of 20 minutes.

5. The method according to any of the preceding claims, **characterized in that** a feed rate of the screw conveyor (3) for the fiber-reinforced plastic material (8) is set to a value of at least 5 cm³/h.

6. The method according to claim 5, **characterized in that** the feed rate of the screw conveyor (3) for the fiber-reinforced plastic material (8) is set to a value of not more than 7500 cm³/h.

7. The method according to claim 6, **characterized in that** the feed rate of the screw conveyor (3) for the fiber-reinforced plastic material (8) is set to a value in the range of less than 250 cm³/h, in particular in the range of 150 cm³/h to 220 cm³/h.

8. An extrusion apparatus for extrusion of fiber-reinforced plastic material for the additive manufacture of a component (1), wherein
- the extrusion apparatus (2) includes a heating zone (43) in which the fiber-reinforced plastic material (8) to be extruded is heated in order to then supply the fiber-reinforced plastic material (8) to an extrusion nozzle (10) of the extrusion apparatus (2), at which a material thread comprising fiber-reinforced plastic material (8) can be extruded for the component to be manufactured, and
- in order to convey the fiber-reinforced plastic material (8) through the heating zone (43), the extrusion apparatus (2) includes a screw conveyor (3) which has a length-diameter ratio of less than 10,
**characterized in that**
in the heating zone (43) a maximum of 5.5. cm³ of volume is provided for the fiber-reinforced plastic material (8) and a rotational speed of the screw conveyor (3) is limited to a maximum of 30 revolutions per minute via an electronic control device (20) of the extrusion apparatus (2).

9. The extrusion apparatus according to any of claim 8, **characterized in that** the screw conveyor (3) has a screw blade rising in the conveying direction of the plastic material (8) with a slope of 7 mm to 17 mm.

10. The extrusion apparatus according to any of claim 8 or 9, **characterized in that**
- at an end located in the conveying direction of the plastic material (8) the heating zone (43) has a conical taper (V) via which fiber-reinforced plastic material (8) can be supplied to the extrusion nozzle (10), and the conical taper (V) includes an opening angle (φ) in the range of 50° to 65°, and/or
- a diameter of a shaft (6) of the screw conveyor (3) within the heating zone (43) increases at least once in the conveying direction of the plastic material (8), and/or
- the heating zone (43) extends along a conveying direction of the plastic material (8) and parallel to a longitudinal axis of the screw conveyor (3) with a length that maximally corresponds to half of a length of the screw conveyor (3) measured along the longitudinal axis, and/or
- the screw conveyor (3) with a melting and compression zone (32) and an ejection zone (33) following the same in the conveying direction of the plastic material (8) and including an axial end of the screw conveyor (3) extends within the heating zone (43), and the melting and compression zone (32) and the ejection zone (33) together do not exceed one third of a length of the screw conveyor (3) measured along the longitudinal axis.

11. The extrusion apparatus according to claim 10, **characterized in that** the diameter of the shaft (6) within the heating zone (43) conically increases with an angle in the range of 7° to 10° and up to 1.5 to 2 times a smallest diameter of the shaft (6) of the screw conveyor (3).

12. The extrusion apparatus according to any of claims 8 to 11, **characterized in that** the extrusion apparatus (2) includes a feed zone (41) at which the fiber-reinforced plastic material can be supplied to the screw conveyor (3), and in the conveying direction of the plastic material (8) the heating zone (43) follows a barrier zone (42) which spatially separates the heating zone (43) from the feed zone (41) of the extrusion apparatus (2),
wherein
- the barrier zone (42) is formed by a housing portion (42g) made of a material that has a lower thermal conductivity than the material from which a housing portion (43g) adjoining the barrier zone (42) is made, with which the heating zone (43) is formed at least in part, and
- the housing portion (43g) at least partly forming the heating zone (43) has a larger thermal mass than the housing portion (42g) forming the barrier zone (42).

13. The extrusion apparatus according to any of claims 8 to 12, **characterized in that** in a region between an axial end of the screw conveyor (3), which is located in the conveying direction of the plastic material (8), and the extrusion nozzle (10) a reservoir (7) is provided, in which molten fiber-reinforced plastic material (8) can be maintained in a state of excess pressure.

14. The extrusion apparatus according to claim 13, **characterized in that** the reservoir extends parallel to the conveying direction and to the longitudinal axis of the screw conveyor (3) with a length that maximally corresponds to one third of the length of the screw conveyor (3) measured along the longitudinal axis.

15. A 3D printing device comprising at least one extrusion apparatus (2) according to any of claims 8 to 14.

## Revendications

1. Procédé d'extrusion de matériau plastique renforcé de fibres pour la fabrication additive d'un composant (1), dans lequel
- le matériau plastique (8) renforcé de fibres est amené à un dispositif d'extrusion (2) et chauffé dans une zone de chauffage (43) du dispositif d'extrusion (2) pour amener le matériau plastique (8) renforcé de fibres ultérieurement à une buse d'extrusion (10) du dispositif d'extrusion (2) sur laquelle un fil de matériau avec le matériau plastique (8) renforcé de fibres est extrudé pour le composant à fabriquer, et
- une vis sans fin (3) du dispositif d'extrusion (2), qui présente un rapport longueur-diamètre inférieur à 10, est utilisée pour le transport du matériau plastique (8) renforcé de fibres à travers la zone de chauffage (43),
**caractérisé en ce que**
dans la zone de chauffage (43), au maximum 5,5 cm³ de volume est mis à disposition pour le matériau plastique (8) renforcé de fibres et une vitesse de rotation de la vis sans fin (3) est limitée à un maximum de 30 tours par minute.

2. Procédé selon la revendication 1, **caractérisé en ce qu'**un volume dans la plage de 2,5 cm³ à 5,5 cm³ pour le matériau plastique renforcé de fibres est mis à disposition dans la zone de chauffage.

3. Procédé selon la revendication 2, **caractérisé en ce qu'**un volume dans la plage de 3,0 cm³ à 3,5 cm³ pour le matériau plastique renforcé de fibres est mis à disposition dans la zone de chauffage.

4. Procédé selon l'une quelconque des revendications 1 à 3, **caractérisé en ce qu'**un débit de la vis sans fin (3) pour le matériau plastique (8) renforcé de fibres est réglé de sorte que le matériau plastique (8) renforcé de fibres à transporter en direction de la buse d'extrusion (10) reste au maximum 30 minutes, en particulier au moins 1,5 seconde et au maximum 20 minutes, dans la zone de chauffage (43).

5. Procédé selon l'une quelconque des revendications précédentes, **caractérisé en ce qu'**un débit de la vis sans fin (3) pour le matériau plastique (8) renforcé de fibres est réglé à une valeur d'au moins 5 cm³/h.

6. Procédé selon la revendication 5, **caractérisé en ce que** le débit de la vis sans fin (3) pour le matériau plastique (8) renforcé de fibres est réglé à une valeur maximale de 7500 cm³/h.

7. Procédé selon la revendication 6, **caractérisé en ce que** le débit de la vis sans fin (3) pour le matériau plastique (8) renforcé de fibres est réglé sur une valeur dans la plage inférieure à 250 cm³/h, en particulier dans la plage de 150 cm³/h à 220 cm³/h.

8. Dispositif d'extrusion pour l'extrusion de matériau plastique renforcé de fibres pour la fabrication additive d'un composant (1), dans lequel
- le dispositif d'extrusion (2) présente une zone de chauffage (43) dans laquelle le matériau plastique renforcé de fibres à extruder est chauffé, pour amener le matériau plastique (8) renforcé de fibres ultérieurement à une buse d'extrusion (10) du dispositif d'extrusion (2) sur laquelle un fil de matériau avec le matériau plastique (8) renforcé de fibres est extrudable pour le composant à fabriquer, et
- le dispositif d'extrusion (2) pour le transport du matériau plastique (8) renforcé de fibres à travers la zone de chauffage (43) présente une vis sans fin (3) qui présente un rapport longueur-diamètre inférieur à 10,
**caractérisé en ce que**
dans la zone de chauffage (43), au maximum 5,5 cm³ de volume est mis à disposition pour le matériau plastique (8) renforcé de fibres et une vitesse de rotation de la vis sans fin (3) est limitée à un maximum de 30 tours par minute par un système de commande électronique (20) du dispositif d'extrusion (2).

9. Dispositif d'extrusion selon la revendication 8, **caractérisé en ce que** la vis sans fin (3) présente une lame de vis ascendante dans la direction de transport du matériau plastique (8) avec une pente ascendante de 7 mm à 17 mm.

10. Dispositif d'extrusion selon la revendication 8 ou 9, **caractérisé en ce que**
- la zone de chauffage (43) présente au niveau d'une extrémité située dans la direction de transport du matériau plastique (8) un amincissement conique (V), par l'intermédiaire duquel le matériau plastique (8) renforcé de fibres peut être amené à la buse d'extrusion (10), et l'amincissement conique (V) présente un angle d'ouverture (φ) dans la plage de 50° à 65°, et/ou
- un diamètre d'un arbre (6) de la vis sans fin (3) à l'intérieur de la zone de chauffage (43) augmente au moins une fois dans la direction de transport du matériau plastique (8), et/ou
- la zone de chauffage (43) s'étend le long d'une direction de transport du matériau plastique (8) et parallèlement à un axe longitudinal de la vis sans fin (3) avec une longueur qui correspond au maximum à la moitié d'une longueur de la vis sans fin (3) mesurée le long de l'axe longitudinal, et/ou
- la vis sans fin (3) avec une zone de fusion et de compression (32) ainsi qu'une zone d'éjection (33) suivant celle-ci dans la direction de transport du matériau plastique (8) et présentant une extrémité axiale de la vis sans fin (3) s'étend à l'intérieur de la zone de chauffage (43) et la zone de fusion et de compression (32) et la zone d'éjection (33) ne dépassent pas ensemble un tiers d'une longueur de la vis sans fin (3) mesurée le long de l'axe longitudinal.

11. Dispositif d'extrusion selon la revendication 10, **caractérisé en ce que** le diamètre de l'arbre (6) augmente coniquement à l'intérieur de la zone de chauffage (43) avec un angle dans la plage de 7° à 10° et jusqu'à 1,5 à 2 fois un diamètre le plus petit de l'arbre (6) de la vis sans fin (3).

12. Dispositif d'extrusion selon l'une quelconque des revendications 8 à 11, **caractérisé en ce que** le dispositif d'extrusion (2) présente une zone d'entrée (41) sur laquelle le matériau plastique renforcé de fibres peut être amené à la vis sans fin (3), et dans la direction de transport du matériau plastique (8) la zone de chauffage (43) suit une zone de barrière (42) qui sépare spatialement la zone de chauffage (43) de la zone d'entrée (41) du dispositif d'extrusion (2), dans lequel
- la zone barrière (42) est formée par une section de boîtier (42g) en un matériau qui présente une conductivité thermique inférieure à celle du matériau dont est constituée une section de boîtier (43g) adjacente à la zone barrière (42), avec laquelle la zone de chauffage (43) est formée au moins partiellement, et
- la section de boîtier (43g) formant au moins partiellement la zone de chauffage (43) présente une masse thermique supérieure à celle de la section de boîtier (42g) formant la zone barrière (42).

13. Dispositif d'extrusion selon l'une quelconque des revendications 8 à 12, **caractérisé en ce qu'**un réservoir (7), dans lequel un matériau plastique (8) renforcé de fibres fondu peut être conservé dans un état de surpression, est prévu dans une zone entre une extrémité axiale de la vis sans fin (3) située dans la direction de transport du matériau plastique (8) et la buse d'extrusion (10).

14. Dispositif d'extrusion selon la revendication 13, **caractérisé en ce que** le réservoir s'étend avec une longueur parallèle à la direction de transport et à l'axe longitudinal de la vis sans fin (3) qui correspond au maximum à un tiers de la longueur de la vis sans fin (3) mesurée le long de l'axe longitudinal.

15. Dispositif d'impression 3D avec au moins un dispositif d'extrusion (2) selon l'une quelconque des revendications 8 à 14.
